# EUROPÄISCHE PATENTSCHRIFT

(11) **EP 4 104 263 B1**
(45) Veröffentlichungstag und Bekanntmachung des Hinweises auf die Patenterteilung: **31.01.2024**
(21) Anmeldenummer: 21706852.7
(22) Anmeldetag: 08.02.2021
(51) Int. Cl.: H02G 1/00, B23D 35/00, B23D 29/00

(54) **ZANGENARTIGES SCHNEIDWERKZEUG**
PLIERS-TYPE CUTTING TOOL
OUTIL DE COUPE DE TYPE PINCE

(30) Priorität: 11.02.2020 DE 102020103467
(43) Veröffentlichungstag der Anmeldung: 21.12.2022
(73) Patentinhaber: Knipex-Werk C. Gustav Putsch KG, 42349 Wuppertal (DE)
(72) Erfinder: SCHLEIMINGER, Jan, 42697 Solingen (DE); MOSLER, Mario, 42799 Leichlingen (DE); LIEDTKE, Kevin, 42289 Wuppertal (DE)
(74) Vertreter: Müller, Enno
(86) Internationale Anmeldenummer: PCT/EP2021/052933
(87) Internationale Veröffentlichungsnummer: WO 2021/160549

(56) Entgegenhaltungen:
- DE-A1- 19 506 457
- DE-U- 1 883 649
- DE-U1- 29 703 308
- US-A- 4 026 018
- US-A1- 2015 340 849
- Klein Tools: "Klein Tools 63035 Utility Cable Cutter", Amazon.com, 26. Oktober 2006 (2006-10-26), XP055804990, Gefunden im Internet: URL:https://www.amazon.com/Utility-Cutter- Klein-Tools-63035/dp/B000OMN9F2/ref=psdc_5 53186_t1_B0002RI79M [gefunden am 2021-05-17]

## Beschreibung

### Gebiet der Technik

Die Erfindung betrifft zunächst ein zangenartiges Schneidwerkzeug mit zwei Werkzeugschenkeln, die um eine Drehachse entlang einer Schwenkebene zueinander verschwenkbar sind, wobei die Werkzeugschenkel auf einer Seite der Drehachse Griffabschnitte und auf der anderen Seite ein Zangenmaul bilden, wobei weiter Arbeitsflächen des Zangenmauls als Schneiden ausgebildet sind, die bei einer Bewegung in eine Schließstellung des Schneidwerkzeugs radial außen zu einem verbleibenden Öffnungsbereich, gesehen von der Drehachse, in einer ersten Schließstellung erstmalig in einem Schließbereich in eine Übereinanderlage kommen, wobei sich in einer solchen Stellung nach radial innen mehrere gegenüberliegend an den Arbeitsflächen ausgebildete, jeweils eine eigene Krümmungskontur aufweisende und den Öffnungsbereich bildende Schneidbereiche anschließen, und die Schneiden weiter bezogen auf eine senkrecht zu der Schwenkebene stehende Mittelebene, welche durch die Drehachse und den Schließbereich verläuft, in der ersten Schließstellung ausgehend von dem Schließbereich in Richtung der Drehachse eine auf der Mittelebene abgetragene freie Länge aufweisen, die abgetragen ist entlang einer senkrecht auf der Schwenkebene stehenden und durch die Drehachse sowie den Schließbereich verlaufende Mittelebene, wobei weiter über die freie Länge in der ersten Schließstellung in einer Richtung quer zu der Mittelebene zwischen den Schneiden eine maximale Öffnungsbreite gegeben ist, die maximale Öffnungsbreite ein Drittel oder mehr einer Gesamtlänge der Schneiden beträgt, wobei die Gesamtlänge an einer an einem gelenknahen Schnittpunkt zu der gegenüberliegenden Schneide beginnenden und an einem gelenkfernen freien Ende der Schneide endenden Gerade abgetragen ist und für die Schneidbereiche sich eine jeweils größte Öffnungsbreite ergibt.

Weiter betrifft die Erfindung ein zangenartiges Schneidwerkzeug mit zwei Werkzeugschenkeln, die um eine Drehachse in einer Schwenkebene zueinander verschwenkbar sind, wobei die Werkzeugschenkel auf einer Seite der Drehachse Griffabschnitte und auf der anderen Seite ein Zangenmaul bilden, wobei weiter Arbeitsflächen des Zangenmauls als Schneiden ausgebildet sind, die bei einer Bewegung in eine Schließstellung des Schneidwerkzeugs radial außen zu einem hierbei verbleibenden Öffnungsbereich erstmalig in einer ersten Schließstellung in einem Schließbereich in eine Übereinanderlage kommen, wobei die Schneiden weiter bezogen auf eine senkrecht zu der Schwenkebene stehende Mittelebene, welche durch die Drehachse und den Schließbereich verläuft, in der ersten Schließstellung ausgehend von dem Schließbereich in Richtung der Drehachse, eine auf dieser Mittelebene abgetragene freie Länge aufweisen, wobei weiter beide Schneiden über die freie Länge voneinander gesonderte konkave Schneidbereiche aufweisen und wobei ein Schneidbereich in Bezug auf eine Senkrechte zu einer den Schneidbereich schließenden, gedachten Gerade, die jeweils auf einem einen betrachteten Schneidbereich von einem benachbarten Schneidbereich sondernden, spitzenartig auslaufenden Steg aufliegt, eine größte Tiefe aufweist, wobei weiter jede Schneide über die freie Länge nur eine Anzahl von drei bis sieben Schneidbereichen aufweist.

Darüber hinaus betrifft die Erfindung ein zangenartiges Schneidwerkzeug mit zwei Werkzeugschenkeln, die um eine Drehachse entlang einer Schwenkebene zueinander verschwenkbar sind, wobei die Werkzeugschenkel auf einer Seite der Drehachse Griffabschnitte und auf der anderen Seite ein Zangenmaul bilden, wobei weiter Arbeitsflächen des Zangenmauls als Schneiden ausgebildet sind, die bei einer Bewegung in eine Schließstellung des Schneidwerkzeugs radial außen zu einem verbleibenden Öffnungsbereich, gesehen von der Drehachse, in einer ersten Schließstellung erstmalig in einem Schließbereich in eine Übereinanderlage kommen, wobei sich in der ersten Schließstellung nach radial innen mehrere gegenüberliegend an den Arbeitsflächen ausgebildete, jeweils eine eigene Krümmungskontur aufweisende und den Öffnungsbereich bildende Schneidbereiche anschließen, und die Schneiden weiter bezogen auf eine senkrecht zu der Schwenkebene stehende Mittelebene, welche durch die Drehachse und den Schließbereich verläuft, in der ersten Schließstellung ausgehend von dem Schließbereich in Richtung der Drehachse eine auf dieser Mittelebene abgetragene freie Länge aufweisen, wobei sich für zwei gegenüberliegende Schneidbereiche in einer Richtung quer zu der Mittelebene betrachtet jeweils eine größte Öffnungsbreite ergibt, wobei weiter ausgehend von dem auf den Schließbereich in Richtung auf die Drehachse folgenden ersten Schneidbereich mindestens ein zweiter und ein dritter Schneidbereich folgen, deren größte Öffnungsbreite jeweils größer ist als die größte Öffnungsbreite jeder der vorhergehenden Schneidbereiche.

### Stand der Technik

Schneidwerkzeuge der in Rede stehenden Art sind in verschiedenen Ausführungen bekannt, insbesondere zum Durchtrennen von Rohren, Kabeln und Leitungen aus Kupfer, Stahl oder Glasfaser. Weiter sind derartige Schneidwerkzeuge als sogenannte Kabelschneider oder Kabelschneidzangen bekannt, wobei bei zangenartigen Werkzeugen die Griffabschnitte bevorzugt langgestreckt stabartig ausgebildet sind, weiter bevorzugt ohne Ausbildung eines ösenartigen Durchgriffs für die Finger.

Weiter ist ein derartiges Schneidwerkzeug beispielsweise aus der DE 1 883 649 U bekannt. Die hieraus bekannte Kabelschere ist hinsichtlich der Schneidbereiche der Schneiden unterschiedlich gestaltet. Die Schneidbereiche sind nicht gegenüberliegend ausgebildet, sondern versetzt zueinander.

Aus der US 4026018 A ist ein zangenartiges Schneidwerkzeug bekannt, das nur einen zweiten Schneidbereich aufweist, der eine größere Öffnungsweite besitzt als der erste Schneidbereich. Die Schneidbereiche verlaufen geradlinig. Aus der US 2015/0340849 A1 ist auch ein Schneidwerkzeug bekannt, das nur zwei Schneidbereiche aufweist.

Aus der DE 29703308 U1 ist eine Kabelschere bekannt, die ausgehend von einem Schließbereich keine mehrfachen Schneiden aufweist. Aus der DE 19506457 C2 ist ein der vorgenannten Druckschriften vergleichbarer Kabelschneider bekannt.

Derartige zangenartige Schneidwerkzeuge sind insbesondere auch in einer Ausführung bekannt, bei welcher die Werkzeugschenkel sich in einem Gelenkbereich kreuzen. Hierzu ist beispielsweise auf die DE 297 03 308 A1, DE 87 02 959 U und DE 10 2018 110 105 A1 zu verweisen. Zangenartige Schneidwerkzeuge mit in einem Gelenkbereich sich kreuzenden Werkzeugschenkeln sind insbesondere Gegenstand der Erfindung.

Der Gelenkbereich kann in üblicher Weise durch einen Gelenkbolzen gegeben sein. Es kann aber auch ein Gelenkbereich mit einer radialen Führung ausgebildet sein, wozu etwa auf die EP 2 915 618 A1 zu verweisen ist.

### Zusammenfassung der Erfindung

Ausgehend von dem dargelegten Stand der Technik beschäftigt sich die Erfindung mit der Aufgabenstellung, ein insbesondere im Hinblick auf ein verbessertes Schneidergebnis vorteilhaftes zangenartiges Schneidwerkzeug anzugeben.

Diese Aufgabe ist zunächst beim Gegenstand des Anspruches 1 gelöst, wobei darauf abgestellt ist, dass ausgehend von dem auf den Schließbereich in Richtung auf die Drehachse folgenden ersten Schneidbereich ein zweiter und dritter Schneidbereich gegeben ist, deren größte Öffnungsbreite jeweils größer ist als die größte Öffnungsbreite jeder der vorhergehenden Schneidbereiche, dass die jeweils gegenüberliegenden Schneidbereiche bezogen auf die Mittelebene eine gleiche Schneidbereichslänge aufweisen und dass mit Bezug auf eine Darstellung, in der sich die Schwenkebene als Fläche und die Mittelebene als Linie darstellt, die Mittelebene eine Symmetrieachse bildet, um welche die sichtbare und somit die Schneidöffnung definierende Kontur der beiden Schneiden gespiegelt ist über die freie Länge in der ersten Schließstellung in einer Richtung quer zu der Mittelebene zwischen den Schneiden eine maximale Öffnungsbreite gegeben ist, und dass die maximale Öffnungsbreite ein Drittel oder mehr einer Gesamtlänge der Schneiden beträgt, wobei die Gesamtlänge an einer an einem gelenknahen Schnittpunkt zu der gegenüberliegenden Schneide beginnenden und an einem gelenkfernen freien Ende der Schneide endenden Gerade abgetragen ist, wobei für die Schneidbereiche sich eine jeweils größte Öffnungsbreite ergibt, dass ausgehend von dem auf dem Schließbereich in Richtung auf die Drehachse folgenden ersten Schneidbereich ein zweiter und dritter Schneidbereich gegeben ist, deren größte Öffnungsbreite jeweils größer ist als die größte Öffnungsbreite jeder der vorhergehenden Schneidbereiche, dass die jeweils gegenüberliegenden Schneidbereiche bezogen auf die Mittelebene eine gleiche Schneidbereichslänge aufweisen und dass mit Bezug auf eine Darstellung, in der sich die Schwenkebene als Fläche und die Mittelebene als Linie darstellt, die Mittelebene eine Symmetrieachse bildet, um welche die sichtbare und somit die Schneidöffnung definierende Kontur der beiden Schneiden gespiegelt ist.

Diese Aufgabe ist auch beim Gegenstand des Anspruches 2 gelöst, wobei darauf abgestellt ist, dass zumindest zwei Schneidbereiche jeder Schneide eine größte Tiefe von 0,4 oder mehr Millimetern aufweisen und dass sich weiter bei einer senkrechten Projektion der spitzenartig auslaufenden Stege auf die Mittelebene entlang der Mittelebene Abstände zwischen den Stegen ergeben, die den einzelnen Schneidbereichen entsprechen, wobei der Abstand zwischen zwei Stegen eines Schneidbereiches dem 0,7- bis 1,3-Fachen des Abstandes zwischen zwei Stegen des benachbarten Schneidbereiches entspricht jede Schneide über die freie Länge nur eine Anzahl von drei bis sieben Schneidbereichen aufweist, dass zumindest zwei Schneidbereiche jeder Schneide eine größte Tiefe von 0,4 oder mehr Millimetern aufweisen und dass sich weiter bei einer senkrechten Projektion der spitzenartig auslaufenden Stege auf die Mittelebene entlang der Mittelebene Abstände zwischen den Stegen ergeben, die den einzelnen Schneidbereichen entsprechen, wobei der Abstand zwischen zwei Stegen eines Schneidbereiches dem 0,7- bis 1,3-Fachen des Abstandes zwischen zwei Stegen des benachbarten Schneidbereiches entspricht.

Auch ist die Aufgabe beim Gegenstand des Anspruches 3 gelöst, wobei darauf abgestellt ist, dass die jeweils gegenüberliegenden Schneidbereiche bezogen auf die Mittelebene eine gleiche Teillänge aufweisen und dass bei einem weiteren Schließen des Schneidwerkzeugs verbleibende zwei konkave Schneidbereiche in eine Stellung überführbar sind, in der zwei in Bezug auf die Mittelebene nebeneinander angeordnete und voneinander getrennte Öffnungen verbleiben ausgehend von dem auf den Schließbereich in Richtung auf die Drehachse folgenden ersten Schneidbereich mindestens ein zweiter und ein dritter Schneidbereich folgt, deren größte Öffnungsbreite jeweils größer ist als die größte Öffnungsbreite jeder der vorhergehenden Schneidbereiche und dass die jeweils gegenüberliegenden Schneidbereiche bezogen auf die Mittelebene eine gleiche Teillänge aufweisen und dass bei einem weiteren Schließen des Schneidwerkzeugs verbleibende zwei konkave Schneidbereiche in eine Stellung überführbar sind, in der zwei in Bezug auf die Mittelebene nebeneinander angeordnete und voneinander getrennte Öffnungen verbleiben.

Nicht zuletzt ist die Aufgabe auch beim Gegenstand des Anspruches 4 gelöst, wobei darauf abgestellt ist, dass Schneidbereiche mit mehr als zwei unterschiedlich größten Tiefen vorgesehen sind, dass ein Schneidbereich absolut größter Tiefe, bezogen auf die freie Länge, der Hälfte oder einem ausgehend von der Hälfte sich zu der Drehachse hin anschließenden Bereich der freien Länge zugeordnet ist und dass jede Schneide mit Blick auf die gegenüberliegende Schneide ausgehend von dem gelenknahen Schnittpunkt zu der gegenüberliegenden Schneide etwa über zwei Drittel bis drei Viertel der Gesamtlänge eine im Wesentlichen konkave, sichelartige Kontur aufweist, die endseitig der Schneide in zwei in Richtung der Gesamtlänge anschließende Geradabschnitte übergeht.

Es handelt sich um ein zangenartiges Schneidwerkzeug, wobei die Betätigung praktisch entsprechend einer üblichen Zange erfolgt. Es sind Griffabschnitte ausgebildet, die bevorzugt ohne eine Fingeröffnung gebildet sind, wie sie bei Scheren häufig vorgesehen sind. Die Griffbereiche kommen auch an ihren freien Enden im geschlossenen Zustand des Schneidwerkzeuges bevorzugt nicht zur Anlage. Die Griffbereiche sind weiter bevorzugt im Wesentlichen gerade verlaufend gebildet.

Die Schneidbereiche mit der eigenen Krümmungskontur weisen bevorzugt eine durchgehend konkave Krümmungskontur auf.

Die beschriebenen Ausgestaltungen lassen insbesondere ein verbessertes Schneidergebnis bei einem Durchtrennen von Rohren oder, wie auch bevorzugt, Kabeln, weiter insbesondere Elektrokabeln, erreichen. In dem im Zuge der Bewegung der das Schneidmaul begrenzenden Schneidbacken in Richtung auf eine Schneidmaul-Schließstellung erreichten ersten Schließbereich ergibt sich zunächst eine rundum geschlossene Schneidöffnung, in welcher das zu schneidende Werkstück, beispielsweise das Kabel, einliegt. Der (erste) Schließbereich kann in einer Projektion in Richtung der Drehachse eine gewisse Übereinanderlage der Schneiden, insbesondere wenn diese in diesem Bereich gerade verlaufen, bedeuten oder auch nur eine punktartige Übereinanderlage. Mit einem Ausbilden des (ersten) Schließbereiches ergibt sich eine erste Schließstellung. Es können nach einer der Ausführungsformen spitzenartige Stege vorgesehen sein, welche die konkaven Schneidbereiche zueinander trennen. Diese Stege können, gegebenenfalls nur vereinzelt, im Zuge der Schneidbewegung der Schneiden im Wesentlichen zu einer zunächst punktartigen Schneidbelastung des zu schneidenden Werkstücks führen, von welcher punktartigen Belastung ausgehend durch die Stege im Zuge der weiteren Schneiden-Schließbewegung beidseitig zunehmend der Schneidvorgang im Wesentlichen in Umfangsrichtung des zu schneidenden Werkstücks fortgeführt wird. Es kann sich so in vorteilhafter Weise zunächst über den Umfang des zu schneidenden Werkstücks beziehungsweise in Erstreckungsrichtung der Schneide eine Mehrzahl von Einzelschnitten ergeben, die sich im Zuge einer weiteren Schließung zu einem Gesamtschnitt über den kompletten Querschnitt des zu schneidenden Werkstücks ergänzen können. Die Stege können dabei dachartige oder verrundete Spitzen bilden, alternativ aber auch stumpfe Spitzenbereiche mit beispielsweise einer Geradfläche.

Die Gesamtlänge der Schneiden ist unberücksichtigt einer Übereinanderlage nur in dem Schließbereich betrachtet, betrifft daher bevorzugt den gesamten Schneidenbereich bis hin zu einer zum Drehpunkt distanzierten freien Schneidenspitze. Das freie Ende einer Schneide ist durch das in der zugrundeliegenden radialen Erstreckung von einem nahe der Drehachse gegebenen Ende der Schneide, typischerweise bestimmt durch einen Schnittpunkt mit dem anderen Werkzeugschenkel, bis zu einem Ende des schneidenmäßig in einem Querschnitt spitz verlaufenden Bereichs des Arbeitsbereiches gegeben. Bevorzugt ist dies auch in radialer Richtung des Werkzeugschenkels beziehungsweise des Zangenmauls das absolute Ende des Arbeitsbereiches.

Die quer zu der Mittelebene betrachtete maximale Öffnungsbreite in einer Schneidenstellung bei Übereinanderlage nur in dem (ersten) Schließbereich kann maßlich einem Drittel oder mehr, weiter bevorzugt zwei Fünftel oder mehr bis hin zu zwei Drittel oder mehr der Gesamtlänge der Schneiden entsprechen. Auch hierdurch ist ein verbessertes Schneidergebnis erreichbar.

Die Gerade, von welcher aus die größte Tiefe senkrecht zu der Gerade gemessen ist, liegt, vom Zangenmaul aus betrachtet, an den ersten Berührungspunkten der, zwei benachbarte Schneidbereiche voneinander trennenden Stege, gegebenenfalls diese Stege tangierend, an.

Diese Tiefe kann bei dem vorgeschlagenen Schneidwerkzeug 0,4 mm oder mehr betragen, so beispielsweise bis hin zu 1 mm oder mehr, weiter beispielsweise 1,5 oder 2 mm.

Der senkrecht auf die Mittelebene projizierte Abstand zwischen zwei spitzenartigen Stegen eines Schneidbereichs kann, wie auch bevorzugt, etwa 70 % bis 130 % des diesbezüglichen Abstandes des unmittelbar zu diesem Schneidbereich benachbarten Schneidbereichs entsprechend. So kann weiter dieser Abstand beispielsweise dem 0,8- oder 0,95-Fachen, darüber hinaus weiter beispielsweise dem 1,15- oder 1,2-Fachen des Abstandmaßes des benachbarten Schneidbereichs entsprechen. Darüber hinaus kann das Abstandmaß gegebenenfalls auch gleich gewählt sein zu dem Abstandsmaß des benachbarten Schneidbereichs. Ausgehend von dem Schließbereich sind in Richtung auf die Drehachse folgende Schneidbereiche nach dem ersten Schneidbereich mit zunehmender Öffnungsbreite ausgebildet, charakterisiert durch eine jeweils größte Öffnungsbreite. Hierdurch kann vorteilhaft erreicht werden, dass bei einem Schließen des Schneidwerkzeuges ein Kabel oder dergleichen Gegenstand von einem vorderen Bereich der Öffnung in einen mittleren Bereich zunehmend auch versetzt oder gedrückt werden kann.

Bei einer Stellung der Werkzeugschenkel in der ersten Schließstellung können, wie auch bevorzugt, sieben oder weniger, aber wenigstens drei konkave Schneidbereiche vorgesehen und unterscheidbar sein. So können weiter bevorzugt beispielsweise vier oder fünf Schneidbereiche vorgesehen sein. Entsprechend können entlang einer Schneide einer Schneidbacke vier oder fünf, untereinander durch spitzenartige Stege getrennte, Schneidbereiche mit vorzugsweise konkaver Kontur der Schneidenspitze bei einer Draufsicht in Richtung der Drehachse ausgebildet sein, wobei weiter bevorzugt beide Schneiden derart gestaltet sein können. In diesem Zusammenhang kann eine mit Bezug zu der Mittelebene spiegelsymmetrische Ausgestaltung der Schneiden gegeben sein.

Bei einer Ausgestaltung einer Mehrzahl von konkaven Schneidbereichen, so beispielsweise drei, vier oder fünf Schneidbereichen, können gemäß einer möglichen Ausgestaltung zwei oder mehr Schneidbereiche bezüglich ihrer konkaven Ausgestaltung und der sich ergebenden größten Tiefe gleich oder annähernd gleich gestaltet sein, dies unter Berücksichtigung der erfindungsgemäßen und bevorzugten Vorgabe, dass mehr als zwei konkave Schneidbereiche einer Schneide unterschiedliche größte Tiefen aufweisen.

Durch die bevorzugte Anordnung des Schneidbereiches absolut größter Tiefe in einem Schneidenbereich, der sich bevorzugt in einer der Drehachse näheren Hälfte der freien Länge der Schneiden im ersten Schließpunkt beziehungsweise im Bereich einer Hälfte dieser freien Länge ergibt, kann sich in vorteilhafter Weise ein Verlauf der Schneiden ergeben, bei welchem der Schneidbereich absolut größter Tiefe im Zuge eines Schneidvorganges gegen Ende, weiter bevorzugt zuletzt, in eine Übereinanderlage zu der gegenüberliegenden Schneide kommt. Darüber hinaus kann zufolge dieser Anordnung und Ausbildung eine Wirkung auf das zu schneidende Werkstück, beispielsweise Kabel, erreicht werden, bei welcher dieses zu schneidende Werkstück im Zuge des Schneidvorgangs, bevorzugt über den gesamten Schneidvorgang (zumindest nachdem die erste Schließstellung erreicht ist), innerhalb der Schneidöffnung tendenziell in Richtung auf die Drehachse belastet ist. Auch hierdurch kann ein verbessertes Schneidergebnis erreicht sein und/oder eine günstigere, kraftmindernde Handhabung.

Über die freie Länge bei einer Stellung der Schneiden in der Übereinanderlage kann nur in dem Schließbereich in einer Richtung quer zu der Mittelebene zwischen den Schneiden eine an einer auf der Mittelebene abgetragenen Zwischenlänge maximale Öffnungsbreite gegeben sein und die maximale Öffnungsbreite kann ein Drittel oder mehr der Gesamtlänge der Schneiden betragen und/oder kann jede Schneide über die freie Länge nur eine Anzahl von drei bis sieben Schneidbereichen aufweisen, wobei zumindest zwei Schneidbereiche jeder Schneide eine größte Tiefe von 0,4 oder mehr Millimetern aufweisen und sich weiter bei einer senkrechten Projektion der spitzenartig auslaufenden Stege auf die Mittelebene sich entlang der Mittelebene Abstände zwischen den Stegen ergeben können, die den einzelnen Schneidbereichen entsprechen, wobei der Abstand zwischen zwei Stegen eines Schneidbereiches dem 0,7- bis 1,3-Fachen des Abstandes zwischen zwei Stegen des benachbarten Schneidbereiches entspricht und/oder ausgehend von dem auf den Schließbereich in Richtung auf die Drehachse folgenden ersten Schneidbereich mindestens ein zweiter und ein dritter Schneidbereich folgt, deren größte Öffnungsbreite jeweils größer ist als die größte Öffnungsbreite jeder der vorhergehenden Schneidbereiche und dass die jeweils gegenüberliegenden Schneidbereiche bezogen auf die Mittelebene eine gleiche Teillänge aufweisen und/oder dass Schneidbereiche mit mehr als zwei unterschiedlich größten Tiefen vorgesehen sind und dass ein Schneidbereich absolut größter Tiefe, bezogen auf die freie Länge, der Hälfte oder einem ausgehend von der Hälfte sich zu der Drehachse hin anschließenden Bereich der freien Länge zugeordnet ist.

Bei einer vorbeschriebenen Stellung der Werkzeugschenkel mit einem Berühren (bezogen auf eine Betrachtung in Richtung der Drehachse) oder einer Übereinanderlage nur in der (ersten) Schließstellung, kann, über die freie Länge betrachtet, eine in einer Richtung quer zu der Mittelebene zwischen den Schneiden und an einer auf der Mittelebene abgetragenen Zwischenlänge maximale Öffnungsbreite der Öffnung, die auch als Schneidöffnung angesprochen sein kann, gegeben sein, wobei die freie Länge neun Zehntel oder mehr der Gesamtlänge der Schneiden und die maximale Öffnungsbreite etwa zwei Fünftel oder mehr der Gesamtlänge der Schneiden betragen kann. Die freie Länge der Schneiden kann darüber hinaus, entlang der Mittelebene betrachtet, dem 0,92-bis 0,99-Fachen der Gesamtlänge einer Schneide entsprechen. Entsprechend kann sich die erste Schließstellung nahe dem der Drehachse entfernten Ende der Schneide ergeben.

Die im Wesentlichen quer zu der Mittelebene betrachtete maximale Öffnungsbreite der Schneiden zueinander, gegebenenfalls, wie auch bevorzugt, im Bereich zumindest eines konkaven Schneidbereichs, kann mehr als zwei Fünftel bis hin zu vier Fünftel oder mehr der Schneiden-Gesamtlänge betragen. Dabei kann sich die maximale Öffnungsbreite im Bereich des konkaven Schneidbereichs mit der absolut größten Tiefe ergeben.

In einem auf der Mittelebene abgetragenen Abstand von drei Fünftel oder weniger der Gesamtlänge der Schneiden, ausgehend von der Drehachse, können gemäß einer möglichen Ausführungsform die Schneiden beginnen. Weiter kann dieser Abstand etwa einem Drittel oder mehr bis hin zu drei Fünftel der Gesamtlänge der Schneiden entsprechen, gemäß einer möglichen Ausführungsform etwa dem 0,5-Fachen der Gesamtlänge.

Weiter ausgehend von der Stellung mit einer Übereinanderlage nur in der (ersten) Schließstellung können bei einem weiteren Schließen des Schneidwerkzeugs beziehungsweise des Schneidmauls, bezogen auf die Drehachse, zunächst nur von radial außen nach radial innen zwei oder mehr radial äußere konkave Schneidbereiche nachfolgend aus der freien Länge ausscheiden. Hiernach ergibt sich eine neue, radial nach innen gegenüber der ersten Schließstellung versetzter zweite oder weitere Schließstellung, wobei die erwähnten radial äußeren konkaven Schneidbereiche in dieser (Zwischen-)Stellung, wie bevorzugt, vollständig oder alternativ auch nur teilweise in Übereinanderlage zu der anderen Schneide treten, sodass gemäß einer bevorzugten Ausgestaltung im Bereich dieser Schneidbereiche im Zuge des Schneidvorganges zunächst gegebene gesonderte Teil-Schneidöffnungen schließen.

Folgend zu dem Ausscheiden der radial äußeren konkaven Schneidbereiche kann im Zuge des weiteren Schließen des Schneidmauls ein weiteres Ausscheiden von konkaven Schneidbereichen bevorzugt von radial innen nach radial außen erfolgen.

Bei geschlossenem Schneidwerkzeug beziehungsweise geschlossenem Schneidmaul kann, wie auch bevorzugt, keine freie Länge gegeben sein. Es ergibt sich hier eine vollständige Übereinanderlage der beiden Schneiden über ihre Längen, sodass sich bevorzugt keine Schneidöffnung mehr ergibt. In dem beschriebenen Sinne sind alle Schneidbereiche ausgeschieden. Es ist keine freie Länge der Schneiden mehr vorhanden.

Ein konkaver Schneidbereich kann gemäß einer möglichen Ausgestaltung durch einen kontinuierlich gekrümmt verlaufenden Schneidenabschnitt gebildet sein. Diese sich bevorzugt zwischen zwei im Wesentlichen in Richtung der Gesamtlänge der Schneiden zueinander distanziert ausgebildeten spitzenartigen Stege erstreckende kontinuierliche Krümmung zur Ausbildung eines konkaven Schneidbereichs kann dabei weiter erreicht sein durch ein über die Strecke der Krümmung gleichbleibendes Radiusmaß. Alternativ können jedoch bei kontinuierlicher Krümmung über die Strecke der Krümmung unterschiedliche Radien gegeben sein, wobei die hierdurch beschriebenen Kreisabschnitte der Krümmung bevorzugt tangential ineinander übergehen. Sie können somit an einem Übergang eine selbe Tangente aufweisen. Auch kann ein solcher Schneidbereich nur teilweise gekrümmt verlaufen und beispielsweise abschnittweise eine Gerade aufweisen.

In weiterer Ausgestaltung können die Werkzeugschenkel im Zuge eines Schließens des Schneidwerkzeugs in eine Stellung überführbar sein, in welcher die Schneiden bei beidseitiger Ausbildung der konkaven Schneidbereiche eine im Wesentlichen rautenförmige Öffnung bilden, wenn die Stege der Schneidbereiche an jeder Schneide für sich untereinander beziehungsweise radial innen mit der Mittelebene durch eine gedachte Gerade verbunden werden. Diese gedachten Geraden begrenzen konkret die rautenförmige Öffnung. Sie sind aber auch nur dazu angeführt, die angesprochene Rautenform im Hinblick auf die tatsächliche Kontur der Öffnung verständlich zu machen. Weiter bevorzugt kann sich dabei eine langgestreckte rautenförmige Öffnung ergeben, mit einer längeren Rautenachse entlang der Mittelebene und einer kürzeren Rautenachse quer zur Mittelebene. Dabei können sich weiter die Rautenflanken jeweils aus mehreren, die Stege miteinander verbindenden Geraden zusammensetzen, welche Geraden einer Rautenflanke gegebenenfalls einen stumpfen Winkel von mehr als 90 Grad bis hin zu weniger als 180 Grad, so beispielsweise etwa 165 bis 175 Grad, zueinander einschließen können.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos. Beispielsweise beinhaltet die Angabe ein Drittel bis drei Fünftel auch die Offenbarung von 0,43 bis 0,6, 0,33 bis 0,5, 0,43 bis 0,5, die Offenbarung von 165 bis 175 Grad, auch die Offenbarung von 165,1 bis 175 Grad, 165 bis 174,9 Grad, 165,1 bis 174,9 Grad, etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung näher erläutert. Es zeigt:
- Fig. 1: ein zangenförmiges Schneidwerkzeug in perspektivischer Darstellung, betreffend die Schneidmaul-Schließstellung;
- Fig. 2: das Schneidwerkzeug gemäß Figur 1 in Ansicht;
- Fig. 3: die Seitenansicht zu Figur 2;
- Fig. 4: die Rückansicht gegen das Schneidwerkzeug in der Schneidmaul-Schließstellung;
- Fig. 5: die Herausvergrößerung des Bereiches V in Figur 2, jedoch betreffend eine Schneidmaul-Offenstellung;
- Fig. 6: eine der Figur 5 entsprechende Darstellung, jedoch eine Schließ-Zwischenstellung mit einer Übereinanderlage der Schneiden in einem ersten Schließbereich;
- Fig. 7: die Herausvergrößerung des Bereiches VII in Figur 6;
- Fig. 8: eine Folgedarstellung zu Figur 6, eine weitere Zwischenstellung im Zuge eines Schließvorganges des Schneidmauls betreffend;
- Fig. 9: die Herausvergrößerung des Bereiches IX in Figur 8;
- Fig. 10: eine Folgedarstellung zu Figur 8, betreffend eine weitere Schließvorgang-Zwischenstellung;
- Fig. 11: die Herausvergrößerung des Bereiches XI in Figur 10;
- Fig. 12: eine Folgedarstellung zu Figur 10;
- Fig. 13: die Herausvergrößerung des Bereiches XIII in Figur 12.

### Beschreibung der Ausführungsformen

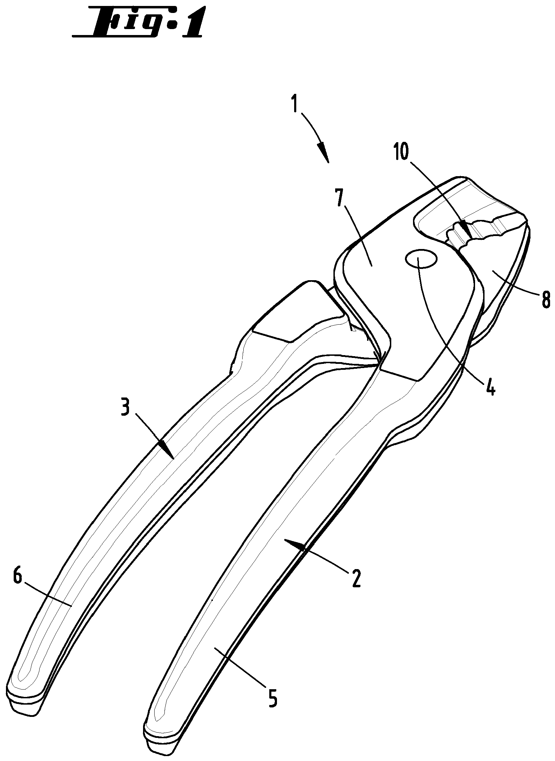

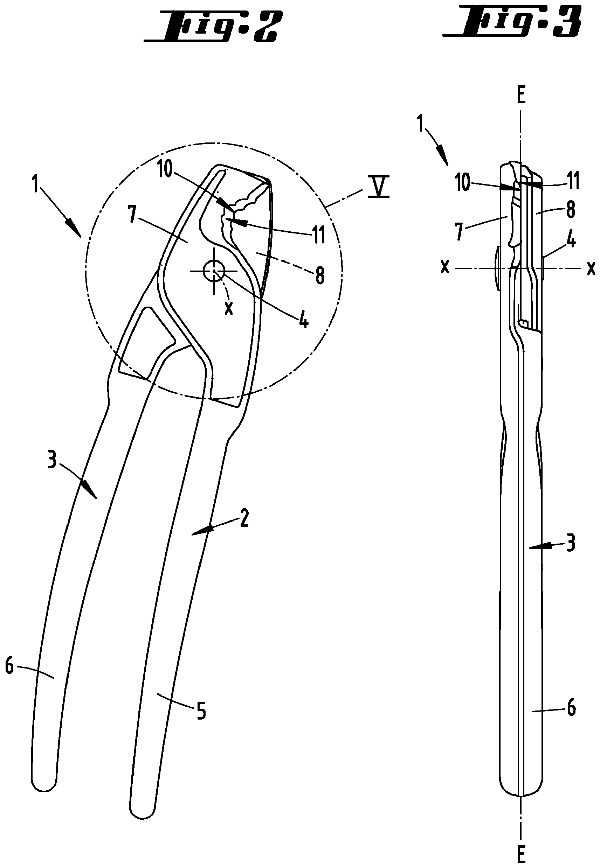

Dargestellt und beschrieben ist, zunächst mit Bezug zu den Figuren 1 bis 4, ein zangenartiges Schneidwerkzeug 1, hier, wie auch bevorzugt, in Form eines Kabelschneiders, mit zwei Werkzeugschenkeln 2 und 3, die sich in einem bevorzugt durch einen Gelenkbolzen 4 (Gewerbe) gebildeten Bereich kreuzen. Auch kann eine geometrische Drehachse x den Gelenkbolzen 4, bevorzugt mittig, durchsetzen. Sie sind entlang einer Schwenkebene E zueinander verschwenkbar. Bevorzugt liegen die Schneiden in der Schwenkebene E gleitbar aufeinander. Die Drehachse x ist bevorzugt senkrecht zu der Schwenkebene E ausgerichtet.

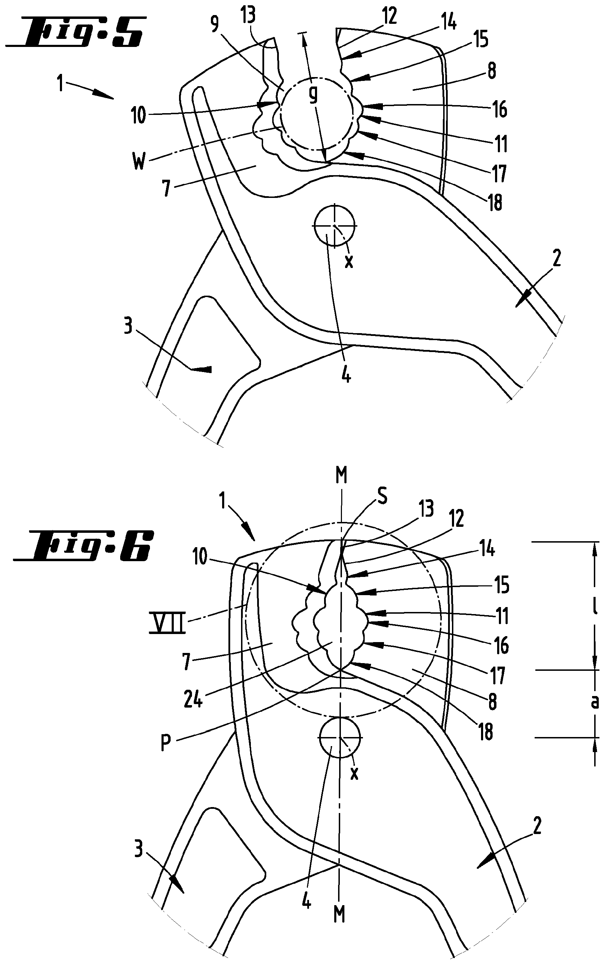

Jeder Werkzeugschenkel 2 und 3 bildet auf einer Seite der Drehachse x einen Griffabschnitt 5 beziehungsweise 6 aus und auf der anderen Seite der Drehachse x Schneidbacken 7 beziehungsweise 8. Die Schneidbacken 7 und 8 begrenzen mit ihren Schneiden 10 und 11 zumindest in einer Offenstellung beispielsweise gemäß Figur 5 ein Schneidmaul 9.

In dem dargestellten Ausführungsbeispiel sind die Schneidbacken 7 und 8 sowie die an diesen ausgebildeten Schneiden 10 und 11 im Wesentlichen gleich ausgebildet. Die nachfolgenden Ausführungen, betreffend die Ausbildung der Schneiden 10, 11, können sich aber auch auf ein Schneidwerkzeug 1 beziehen, welches ungleich gestaltete Schneiden 10 und 11 aufweisen kann. So können die unten näher beschriebenen konkaven Schneidbereiche nur an einer Schneide ausgebildet sein, während die andere Schneide gerade oder insgesamt gekrümmt verläuft und/oder keine oder mehr beziehungsweise weniger oder darüber hinaus geometrisch oder maßlich gegenüber den konkaven Schneidbereichen der einen Schneide verändert ausgebildete konkave Schneidbereiche aufweisen kann.

Jede Schneide 10, 11 weist zunächst eine Gesamtlänge g auf, abgetragen entlang einer, an einem gelenknahen Schnittpunkt P zu der gegenüberliegenden Schneide beginnenden und an einem gelenkfernen freien Ende der Schneide endenden Geraden (vergleiche Figur 5). Falls sich hinsichtlich des Schnittpunktes eine Änderung im Zuge einer Bewegung der Zangenschenkel zueinander ergibt, ist auf die Öffnungsstellung des Schneidwerkzeuges abgestellt. Dabei kann jede Schneide 10 und 11 mit Blick in Richtung auf die gegenüberliegende Schneide 11 oder 10 ausgehend von dem gelenknahen Schnittpunkt P zu der gegenüberliegenden Schneide etwa über zwei Drittel bis drei Viertel der Gesamtlänge g abstrakt betrachtet eine im Wesentlichen konkave, sichelartige Kontur aufweisen, die endseitig der Schneide 10 beziehungsweise 11 in zwei in Richtung der Gesamtlänge g anschließenden Geradabschnitten 12,13 übergehen kann.

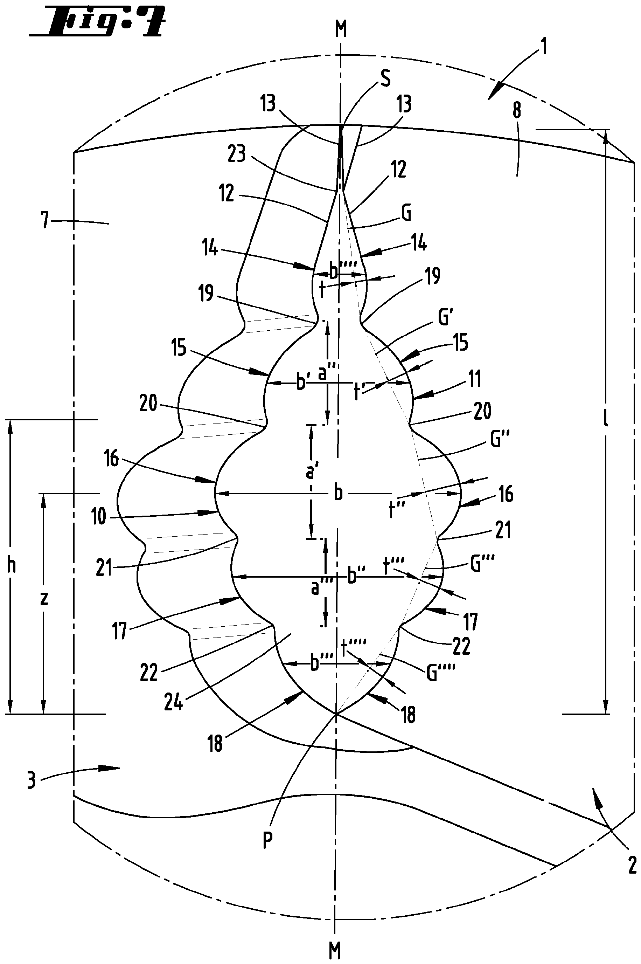

Dabei kann, wie auch bevorzugt, ein mit Bezug auf die Drehachse x radial äußerster Geradabschnitt 13 durchgängig gestreckt verlaufen, während der radial innen an diesen äußersten Geradabschnitt 13 anschließende weitere Geradabschnitt 12, unter Einschluss eines stumpfen Winkels von bevorzugt mehr als 160 Grad, beispielsweise 170 oder 175 Grad zu dem Geradabschnitt 13, im Bereich des dem Geradabschnitt 13 abgewandten Endes in einen konkav gekrümmten Abschnitt übergehen kann (vergleiche auch vergrößerte Darstellung in Figur 7).

Über die Länge jeder Schneide 10,11 betrachtet, weist jede Schneide 10, 11 bevorzugt eine Vielzahl von vereinzelten konkaven Schneidbereichen 14, 15, 16, 17 und 18 auf, die insgesamt im Wesentlichen etwa entlang einer gedachten konkaven Linie angeordnet sind. Die Schneidbereiche 14 bis 18 sind voneinander gesondert durch nach innen in Richtung auf das Schneidmaul 9 weisende spitzenartige Stege 19, 20, 21 und 22. Entsprechend sind insbesondere die Schneidbereiche 15, 16 und 17 jeweils beidseitig endseitig durch einen solchen Steg 19 bis 22 begrenzt. Auch kann darüber hinaus der stumpfwinkelige Übergang der beiden Geradabschnitte 12 und 13 ineinander durch einen weiteren spitzenartigen Steg 23 gegeben sein. Ein Steg kann durch eine Spitze an einem Übergang von zwei gleichsinnig gerundeten, aber im Hinblick auf einen Mittelpunkt oder einen Fokussierungsbereich einer Rundung unterschiedlichen Bereiche gegeben sein. Die Spitze kann auch mittels einer gegensinnigen Krümmung abgerundet sein.

In Figur 7 sind die Stege 19 bis 23 durch gedachte Geraden G, G', G", G‴ und Gʺʺ verbunden. Entsprechend überspannen diese Geraden G bis Gʺʺ die jeweiligen konkaven Schneidbereiche 14 bis 18.

Senkrecht zu diesen Geraden G bis G"" ergeben sich bei jedem konkaven Schneidbereich 14 bis 18 größte Tiefen t, t', t", f‴ und t"", wobei gemäß der Darstellung die größte Tiefe t dem Schneidbereich 14 mit der Geraden G zugeordnet ist, die größte Tiefe t' dem Schneidbereich 15 mit der Geraden G', die größte Tiefe t" dem Schneidbereich 16 mit der Geraden G", die größte Tiefe t‴ dem Schneidbereich 17 mit der Geraden G‴ und die größte Tiefe t"" dem Schneidbereich 18 mit der Geraden G"".

Die Schneidbereiche 14 bis 18 weisen weiter bevorzugt mehr als zwei unterschiedlich größte Tiefen t bis tʺʺ auf. Dabei ergibt sich eine absolut größte Tiefe, die in dem dargestellten Ausführungsbeispiel ausgehend von der geraden G" die größte Tiefe t" des Schneidbereiches 16 beschreibt. Weiter können die größten Tiefen t' und t‴ der zu dem das absolut größte Tiefenmaß t" aufweisenden Schneidbereich 16 benachbarten Schneidbereiche 15 und 17 zumindest annähernd gleich groß gewählt sein. So können die Werte dieser größten Tiefen t' und t‴ etwa dem 0,45- bis 0,55-Fachen des Wertes der absolut größten Tiefe t" entsprechen. Die weiteren Schneidbereiche 14 und 18 weisen den Schneidbereichen 15 und 17 gegenüber weiter kleinere größte Tiefen t und t"" auf. So kann der der Drehachse x nächstgelegene Schneidbereich 18 eine größte Tiefe t"" aufweisen, die etwa dem 0,4- bis 0,5-Fachen und der der Drehachse x abgewandte konkave Schneidbereich 14 eine größte Tiefe t, die etwa dem 0,3-bis 0,4-Fachen der absolut größten Tiefe t" entsprechen kann. Es ergeben sich entsprechend in dem beschriebenen Ausführungsbeispiel fünf konkave Schneidbereiche mit mindestens vier unterschiedlich größten Tiefen.

Die konkaven Schneidbereiche 15, 16, 17 und 18 können, wie auch bevorzugt, jeweils durch einen kontinuierlich gekrümmt verlaufenden Schneidenabschnitt gebildet sein. Dieser gekrümmte Schneidenabschnitt kann durchweg von einem Steg zum nächsten Steg laufend von einem gleich bleibenden Radiusmaß beschrieben sein. Alternativ können, wie auch dargestellt, über die Längserstreckung eines solchen Schneidenabschnitts Krümmungsverläufe mit unterschiedlichen Radien stufenlos ineinander übergehen. Bevorzugt lediglich der zu der Drehachse x am weitesten entfernte konkave Schneidbereich 14 setzt sich aus einem gekrümmt verlaufenden Schneidenabschnitt, unmittelbar im Anschluss an den den Schneidbereich 14 zu dem benachbarten Schneidbereich 15 trennenden Steg 19, und dem sich an den gekrümmt verlaufenden Schneidenabschnitt anschließenden Geradabschnitt 12 zusammen.

Ausgehend von einer Öffnungsstellung, der Schneidmaul-Offenstellung, beziehungsweise einer Stellung gemäß Figur 5, kommen die Schneiden bei einem Schließen des Schneidwerkzeuges zunächst in einem ersten Schließbereich S in eine Übereinanderlage, vergleiche Figuren 6 und 7.

Wie weiter aus der Darstellung in Figur 7 ersichtlich können sich in der Übereinanderlage der Schneiden 10 und 11 nur in dem Schließbereich S bei einer senkrechten Projektion der Schneidbereiche 14, 15, 16, 17 oder 18 auf die Mittelebene M Abstände a', a" und a‴ zwischen den zwei benachbarte Schneidbereiche 14, 15, 16, 17 oder 18 trennenden Stegen 19, 20, 21, 22 oder 23 ergeben. Ein solcher Abstand a', a" oder a‴ kann in einer möglichen Ausführungsform gleich oder annähernd gleich sein dem Abstand a', a" oder a‴ des unmittelbar benachbarten Schneidbereichs 14, 15, 16, 17 oder 18, alternativ etwa dem 0,7- bis 1,3-Fachen des Abstand a', a" oder a‴ des unmittelbar benachbarten Schneidbereichs 14, 15, 16, 17 oder 18 entsprechen.

Bei einer Bewegung der Schneidbacken 7 und 8 in Richtung auf eine Schließstellung gemäß den Figuren 1 bis 4, beispielsweise zum Schneiden eines in das Schneidmaul 9 eingelegten Werkstücks W, beispielsweise einem Kabel, wird im Bereich der zu der Drehachse x distanzierten freien Enden der Schneiden 10 und 11 zufolge Übereinanderlage der Schneiden 10 und 11 - betrachtet in Erstreckungsrichtung der Drehachse x - ein erster Schließbereich S, der bevorzugt ein Schließpunkt ist, erreicht (vergleiche Figuren 6 und 7). Mit Erreichen dieses ersten Schließbereichs S wird im Zuge des Schließvorgangs des Schneidwerkzeugs 1 erstmalig eine geschlossene Schneidöffnung 24 erreicht, in welcher das Werkstück W einliegt. Für die hier wesentliche Betrachtung wird hinsichtlich des Schließbereiches von einem Punkt ausgegangen. In der Praxis ergibt sich aber immer eine - möglichst kleine - Fläche.

Die Schneiden 10 und 11 weisen in dieser Stellung der Werkzeugschenkel 2 und 3 beziehungsweise der Schneidbacken 7 und 8 mit einem Berühren oder einer Übereinanderlage nur in diesem ersten Schließbereich S eine freie Länge 1 auf, die abgetragen ist entlang einer senkrecht auf der Schneidebene E stehenden und durch die Drehachse x sowie den Schließbereich S verlaufenden Mittelebene M. Diese Mittelebene M verläuft in dem Schließbereich S durch den Punkt oder mittig durch die sich ergebene Fläche. Diese Mittelebene M kann weiter gegebenenfalls in jeder Verschwenkstellung der Werkzeugschenkel 2 und 3 beziehungsweise der Schneidbacken 7 und 8 und mit Bezug auf eine Draufsicht gemäß den Darstellungen in den Figuren 5 bis 13, in welchen Darstellungen sich die Schwenkebene E als Fläche und die Mittelebene M als Linie darstellen, eine Symmetrieachse bilden, um welche die sichtbare und somit die Schneidöffnung 24 definierende Kontur der beiden Schneiden 10 und 11 gespiegelt sein kann.

Die freie Länge 1 in der Schließstellung, in welcher der erste Schließbereich S erreicht ist, kann etwa dem 0,9-Fachen oder mehr, beispielsweise bis hin zu dem 0,99-Fachen oder mehr der Gesamtlänge g einer Schneide 10 beziehungsweise 11 entsprechen.

An einer auf der Mittelebene M abgetragenen Zwischenlänge z ist bevorzugt senkrecht gerichtet zu der Mittelebene M in der vorbeschriebenen Schließstellung gemäß Figur 7 eine maximale Öffnungsbreite b gegeben, die bevorzugt zwei Fünftel oder mehr der Gesamtlänge g der Schneiden 10 beziehungsweise 11 betragen kann. Diese maximale Öffnungsbreite b ist in dem dargestellten Ausführungsbeispiel, wie auch bevorzugt, im Bereich der mit Bezug zu der Mittelebene M bevorzugt symmetrisch gegenüberliegenden Schneidbereiche 16 mit den absolut größten Tiefen t" gegeben. Die Zwischenlänge z ist dabei, wie auch die vorbeschriebene freie Länge 1, ausgehend von dem der Drehachse x nahen Schnittpunkt P der Schneiden 10 und 11 beziehungsweise der Schneidbereiche 18 beider Schneiden 10 und 11 in Richtung auf die freien Enden der Schneiden 10 und 11 beziehungsweise in Richtung auf den Schließbereich S abgetragen.

Die maximale Öffnungsbreite b in der Schließstellung gemäß Figur 7 kann in weiterer Ausgestaltung etwa dem 2- bis 3-Fachen eines Abstandes a', a" oder a‴ zwischen zwei einen Schneidbereich 14, 15, 16, 17 oder 18 trennenden Stegen 19, 20, 21, 22 oder 23 entsprechen.

Wie im Hinblick auf die maximale Öffnungsbreite b beschrieben, ergeben sich in der Stellung der Figur 7 auch für weitere Schneidbereiche 14, 15, 17 und 18 eine jeweils größte Öffnungsbreite b', b", b‴ und b"". Ausgehend von dem auf den Schließbereich S in Richtung auf die Drehachse x folgenden ersten Schneidbereich 14 ist bei dem Ausführungsbeispiel ein zweiter Schneidbereich 15 und ein dritter Schneidbereich 16 gegeben, deren größte Öffnungsbreite b' beziehungsweise b (die in den Schneidbereich 16 mit der maximalen Öffnungsbreite b zusammenfällt) jeweils größer ist als die größte Öffnungsbreite b' beziehungsweise b"" jeder der vorhergehenden Schneidbereiche 14, 15. Bevorzugt weisen die jeweils gegenüberliegenden Schneidbereiche 14, 15, 16 - bezogen auf die Mittelebene M eine gleiche Schneidbereichslänge, die in der Figur 7 mit den Abständen a, a', a" und a‴ bezeichnet ist, auf.

Der Beginn der Schneiden 10 und 11 in dem Schnittpunkt P, bezogen auf eine erste Schließstellung, ist entlang der Mittelebene M zu der Drehachse x beabstandet, welcher Abstand a drei Fünftel oder weniger, weiter etwa dem 0,4- bis 0,6-Fachen der Gesamtlänge g der Schneiden 10 beziehungsweise 11 entsprechen kann. Auf diesen, auf der Mittelebene M liegenden Schnittpunkt P ist im Übrigen auch die von dem Steg 22 ausgehende und den Schneidbereich 18 überspannende Gerade G"" gerichtet.

Die beiden Schneidbereiche 16 mit der jeweils absolut größten Tiefe t" sind gemäß einer weiter bevorzugten Ausgestaltung, bezogen auf die freie Länge 1, der Hälfte (Halbmaß h in Figur 7) oder dem ausgehend von der Hälfte in Richtung auf die Drehachse x anschließenden Bereich angeordnet. Wie insbesondere aus der Darstellung in Figur 7 zu erkennen, ist entsprechend der Abstand über die Zwischenlänge z entlang der Mittelebene M ausgehend von dem Schnittpunkt P zu dem Bereich maximaler Öffnungsbreite b kleiner gewählt als das Halbmaß h der freien Länge 1. So kann gemäß dem dargestellten Ausführungsbeispiel die Zwischenlänge z etwa dem 0,5- bis 0,9-Fachen, weiter etwa dem 0,7- bis 0,8-Fachen des Halbmaßes h beziehungsweise etwa dem 0,25- bis 0,45-Fachen, weiter etwa dem 0,35- bis 0,4-Fachen der freien Länge 1 entsprechen.

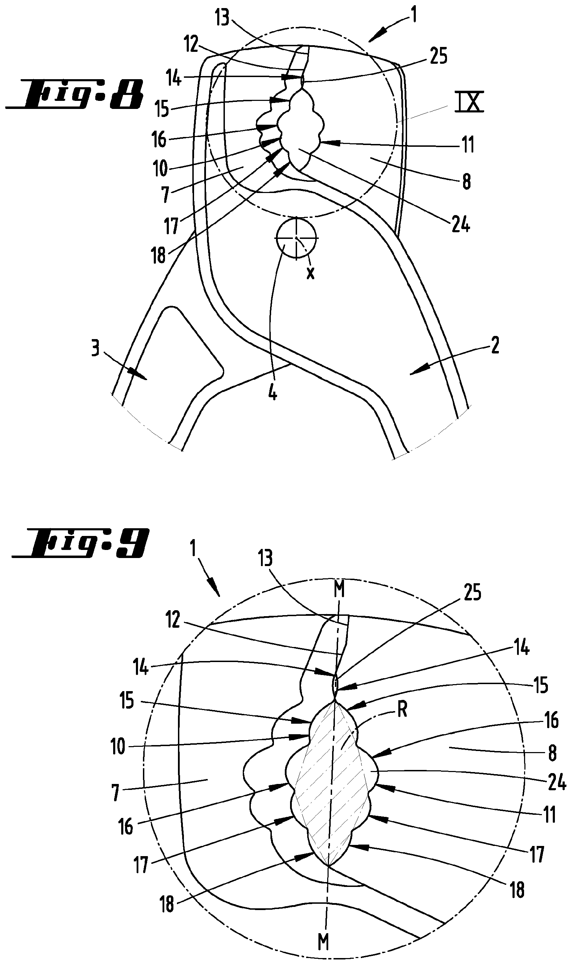

Ausgehend von der Stellung mit einer Berührung oder einer Übereinanderlage der Schneiden 10 und 11 nur in dem (ersten) Schließbereich S erfolgt zunächst ein Schließen des Schneidmauls 9 beziehungsweise der das Schneidmaul 9 begrenzenden Schneidbereiche im Wesentlichen von radial au-βen nach radial innen - bezogen auf die Drehachse x. Dabei scheiden zunächst die radial äußeren Schneidbereiche 14 und 15 aus der freien Länge 1 aus, wobei in einer Zwischenstellung gemäß den Darstellungen in den Figuren 8 und 9 im Bereich der aufeinander zu weisenden Stege 19 beider Schneiden 10 und 11 eine Übereinanderlage in einem weiteren Schließbereich sich einstellt. In dieser Schließstellung der Schneidbacken 7 und 8 zeigt sich zwischen den Schneidbereichen 15 beider Schneiden 10 und 11 eine in Erstreckungsrichtung der Mittelebene M beidseitig begrenzte Restöffnung 25, während in dieser Zwischenstellung, verdeutlicht durch die Geraden G', G", G‴ und G"", die Schneidbereiche 15, 16, 17 und 18 eine insgesamt im Wesentlichen rautenförmige Öffnung R begrenzen, mit einer Rauten-Längsachse entlang der Mittelebene M, deren Länge etwa dem 1,8- bis 2,2-Fachen, weiter etwa dem 2-Fachen der Länge der quer hierzu betrachteten Rauten-Querachse entsprechen kann. Wie bei dem Ausführungsbeispiel ersichtlich, ist die rautenförmige Öffnung bevorzugt aus einer Mehrzahl von gekrümmt verlaufenden Randbereichen, d.h. Schneidkanten, zusammengesetzt. Wie weiter die Geraden G', G", G'" und G"" erkennen lassen, ist weiter bevorzugt die Rautenform auch insoweit atypisch, als auf einer Langseite zwei oder mehr Knickpunkte gegeben sind.

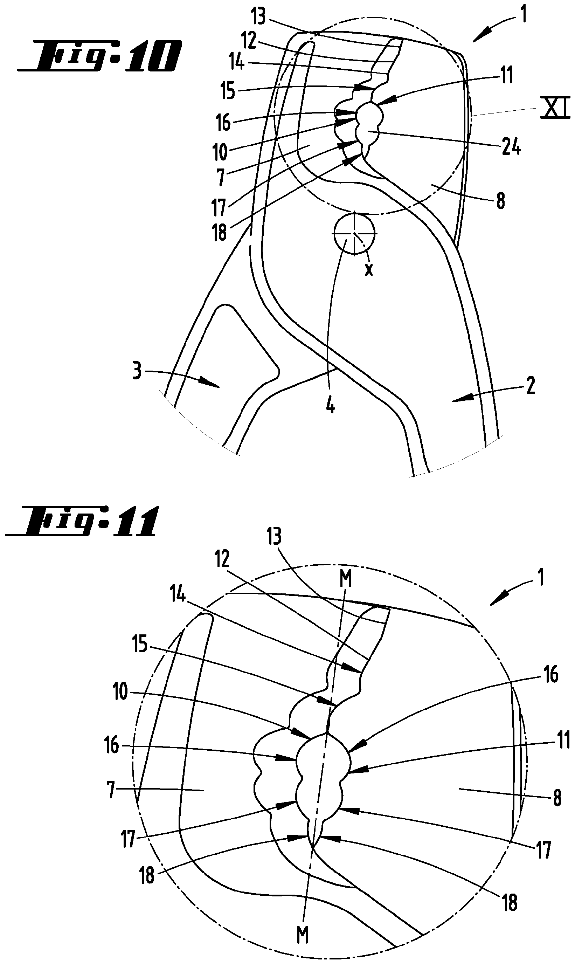

Die Figuren 10 und 11 zeigen eine Folgedarstellung zu den Figuren 8 und 9 im Zuge des weiteren Schließvorgangs. Wie ersichtlich, erfolgt zunächst ein Schließen des Schneidmauls 9 im Bereich der radial äußeren Schneidbereiche 15, gefolgt von einem Schließen im Bereich der radial inneren Schneidbereiche 18.

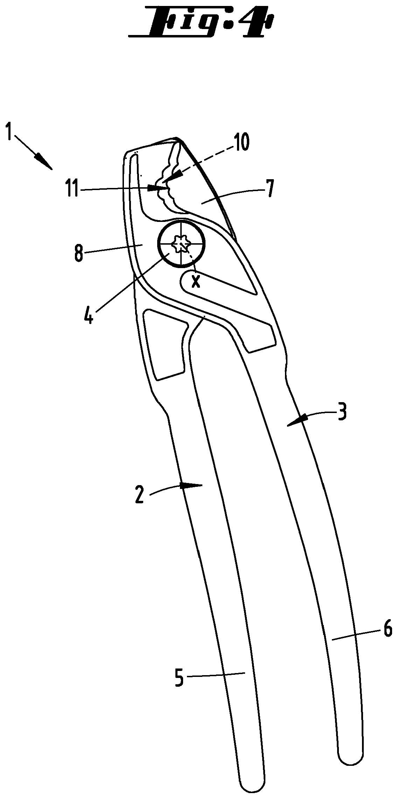

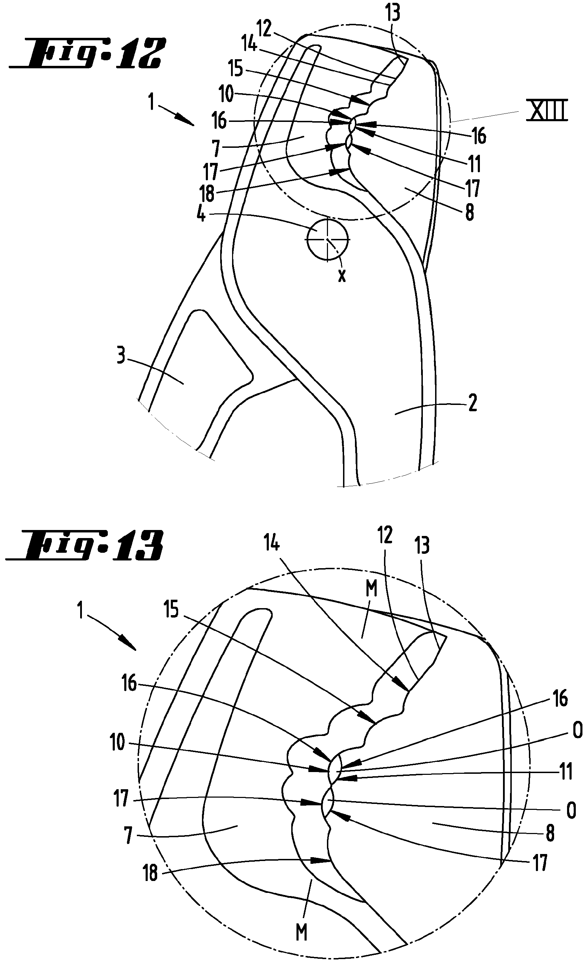

Wie weiter aus den Figuren 12 und 13 ersichtlich, können im Zuge des weiteren Schließens des Schneidmauls 9 zwei verbleibende konkave Schneidbereiche 16 und 17 in Bezug auf die Mittelebene M nebeneinander angeordnete und voneinander getrennte Öffnungen O bilden, die zufolge entsprechender Verlagerung der Werkzeugschenkel 2 und 3 in eine Schließ-Endstellung gemäß Figur 4 gegebenenfalls im Wesentlichen zeitgleich in eine Übereinanderlage und somit in eine Schließlage verbracht werden können, sodass sich in der Schließstellung gemäß Figur 4 keine freie Länge 1 mehr ergibt.

**Liste der Bezugszeichen**

| | | | |
|---|---|---|---|
| 1 | Schneidwerkzeug | a | Abstand |
| 2 | Werkzeugschenkel | a' | Abstand |
| 3 | Werkzeugschenkel | a" | Abstand |
| 4 | Gelenkbolzen | a‴ | Abstand |
| 5 | Griffabschnitt | b | Öffnungsbreite |
| 6 | Griffabschnitt | b' | Öffnungsbreite |
| 7 | Schneidbacke | b" | Öffnungsbreite |
| 8 | Schneidbacke | b‴ | Öffnungsbreite |
| 9 | Zangenmaul | b"" | Öffnungsbreite |
| 10 | Schneide | g | Gesamtlänge |
| 11 | Schneide | h | Halbmaß |
| 12 | Geradabschnitt | 1 | freie Länge |
| 13 | Geradabschnitt | t | größte Tiefe |
| 14 | Schneidbereich | t' | größte Tiefe |
| 15 | Schneidbereich | t" | größte Tiefe |
| 16 | Schneidbereich | t‴ | größte Tiefe |
| 17 | Schneidbereich | t"" | größte Tiefe |
| 18 | Schneidbereich | x | Drehachse |
| 19 | Steg | z | Zwischenlänge |
| 20 | Steg | | |
| 21 | Steg | | |
| 22 | Steg | | |
| 23 | Steg | E | Schwenkebene |
| 24 | Schneidöffnung | G | Gerade |
| 25 | Restöffnung | G' | Gerade |
| | | G" | Gerade |
| | | G‴ | Gerade |
| | | G"" | Gerade |
| M | Mittelebene | | |
| O | Öffnung | | |
| P | Schnittpunkt | | |
| R | rautenförmige Öffnung | | |
| S | Schließbereich | | |
| W | Werkstück | | |

## Patentansprüche

1. Zangenartiges Schneidwerkzeug (1) mit zwei Werkzeugschenkeln (2, 3), die um eine Drehachse (x) entlang einer Schwenkebene (E) zueinander verschwenkbar sind, wobei die Werkzeugschenkel (2, 3) auf einer Seite der Drehachse (x) Griffabschnitte (5, 6) und auf der anderen Seite ein Zangenmaul (9) bilden, wobei weiter Arbeitsflächen des Zangenmauls (9) als Schneiden (10, 11) ausgebildet sind, die bei einer Bewegung in eine Schließstellung des Schneidwerkzeugs (1) radial außen zu einem verbleibenden Öffnungsbereich, gesehen von der Drehachse (x), in einer ersten Schließstellung erstmalig in einem Schließbereich (S) in eine Übereinanderlage kommen, wobei sich in einer solchen Stellung nach radial innen mehrere gegenüberliegend an den Arbeitsflächen ausgebildete, jeweils eine eigene Krümmungskontur aufweisende und den Öffnungsbereich bildende Schneidbereiche (14,15,16,17,18) anschließen, und die Schneiden (10, 11) weiter bezogen auf eine senkrecht zu der Schwenkebene (E) stehende Mittelebene (M), welche durch die Drehachse (x) und den Schließbereich (S) verläuft, in der ersten Schließstellung ausgehend von dem Schließbereich (S) in Richtung der Drehachse (x) eine auf der Mittelebene (M) abgetragene freie Länge (1) aufweisen, die abgetragen ist entlang einer senkrecht auf der Schwenkebene (E) stehenden und durch die Drehachse (x) sowie den Schließbereich (S) verlaufende Mittelebene (M), wobei weiter über die freie Länge (1) in der ersten Schließstellung in einer Richtung quer zu der Mittelebene (M) zwischen den Schneiden (10, 11) eine maximale Öffnungsbreite (b) gegeben ist, die maximale Öffnungsbreite (b) ein Drittel oder mehr einer Gesamtlänge (g) der Schneiden (10, 11) beträgt, wobei die Gesamtlänge (g) an einer an einem gelenknahen Schnittpunkt (P) zu der gegenüberliegenden Schneide beginnenden und an einem gelenkfernen freien Ende der Schneide endenden Gerade abgetragen ist und für die Schneidbereiche (14, 15, 16, 17) sich eine jeweils größte Öffnungsbreite (b', b", b‴, b"") ergibt, wobei ausgehend von dem auf den Schließbereich (S) in Richtung auf die Drehachse (x) folgenden ersten Schneidbereich (14) ein zweiter und dritter Schneidbereich (15, 16) gegeben ist, deren größte Öffnungsbreite (b', b) jeweils größer ist als die größte Öffnungsbreite (b', b"") jeder der vorhergehenden Schneidbereiche (14, 15), **dadurch gekennzeichnet, dass** die jeweils gegenüberliegenden Schneidbereiche (14, 15, 16) bezogen auf die Mittelebene (M) eine gleiche Schneidbereichslänge (a, a', a", a‴) aufweisen und dass mit Bezug auf eine Darstellung, in der sich die Schwenkebene (E) als Fläche und die Mittelebene (M) als Linie darstellt, die Mittelebene (M) eine Symmetrieachse bildet, um welche die sichtbare und somit die Schneidöffnung (24) definierende Kontur der beiden Schneiden (10, 11) gespiegelt ist.

2. Zangenartiges Schneidwerkzeug (1) mit zwei Werkzeugschenkeln (2, 3), die um eine Drehachse (x) in einer Schwenkebene (E) zueinander verschwenkbar sind, wobei die Werkzeugschenkel (2, 3) auf einer Seite der Drehachse (x) Griffabschnitte (5, 6) und auf der anderen Seite ein Zangenmaul (9) bilden, wobei weiter Arbeitsflächen des Zangenmauls (9) als Schneiden (10, 11) ausgebildet sind, die bei einer Bewegung in eine Schließstellung des Schneidwerkzeugs (1) radial außen zu einem hierbei verbleibenden Öffnungsbereich erstmalig in einer ersten Schließstellung in einem Schließbereich (S) in eine Übereinanderlage kommen, wobei die Schneiden (10, 11) weiter bezogen auf eine senkrecht zu der Schwenkebene (E) stehenden Mittelebene (M), welche durch die Drehachse (x) und den Schließbereich (S) verläuft, in der ersten Schließstellung ausgehend von dem Schließbereich (S) in Richtung der Drehachse (x), eine auf der Mittelebene (M) abgetragene freie Länge (1) aufweisen, wobei weiter beide Schneiden (10, 11) über die freie Länge (1) voneinander gesonderte konkave Schneidbereiche (14, 15, 16, 17, 18) aufweisen und wobei ein Schneidbereich (14, 15, 16, 17, 18) in Bezug auf eine Senkrechte zu einer den Schneidbereich schließenden, gedachten Gerade (G, G', G", G‴,G""), die jeweils auf einem einen betrachteten Schneidbereich (14, 15, 16, 17 und 18) von einem benachbarten Schneidbereich (14, 15, 16, 17, 18) sondernden, spitzenartig auslaufenden Steg (19, 20, 21, 22, 23) aufliegt, eine größte Tiefe (t, t', t", t‴, t"") aufweist, wobei weiter jede Schneide (10, 11) über die freie Länge (1) nur eine Anzahl von drei bis sieben Schneidbereichen (14, 15, 16, 17, 18) aufweist, oder Schneidwerkzeug nach Anspruch 1, **dadurch gekennzeichnet, dass** zumindest zwei Schneidbereiche (14, 15, 16, 17, 18) jeder Schneide (10, 11) eine größte Tiefe (t, t', t", t‴, t"") von 0,4 oder mehr Millimetern aufweisen und dass sich weiter bei einer senkrechten Projektion der spitzenartig auslaufenden Stege (19, 20, 21, 22, 23) auf die Mittelebene (M) entlang der Mittelebene (M) Abstände (a', a", a‴) zwischen den Stegen (19, 20, 21, 22, 23) ergeben, die den einzelnen Schneidbereichen (14, 15, 16, 17, 18) entsprechen, wobei der Abstand (a', a", a‴) zwischen zwei Stegen (19, 20, 21, 22, 23) eines Schneidbereiches (14, 15, 16, 17, 18) dem 0,7- bis 1,3-Fachen des Abstandes (a', a", a‴) zwischen zwei Stegen (19, 20, 21, 22, 23) des benachbarten Schneidbereiches (14, 15, 16, 17, 18) entspricht.

3. Zangenartiges Schneidwerkzeug (1) mit zwei Werkzeugschenkeln (2, 3), die um eine Drehachse (x) entlang einer Schwenkebene (E) zueinander verschwenkbar sind, wobei die Werkzeugschenkel (2, 3) auf einer Seite der Drehachse (x) Griffabschnitte (5, 6) und auf der anderen Seite ein Zangenmaul (9) bilden, wobei weiter Arbeitsflächen des Zangenmauls (9) als Schneiden (10, 11) ausgebildet sind, die bei einer Bewegung in eine Schließstellung des Schneidwerkzeugs (1) radial außen zu einem verbleibenden Öffnungsbereich, gesehen von der Drehachse (x), in einer ersten Schließstellung erstmalig in einem Schließbereich (S) in eine Übereinanderlage kommen, wobei sich in der ersten Schließstellung nach radial innen mehrere gegenüberliegend an den Arbeitsflächen ausgebildete, jeweils eine eigene Krümmungskontur aufweisende und den Öffnungsbereich bildende Schneidbereiche (14,15,16,17,18) anschließen, und die Schneiden (10, 11) weiter bezogen auf eine senkrecht zu der Schwenkebene (E) stehende Mittelebene (M), welche durch die Drehachse (x) und den Schließbereich (S) verläuft, in der ersten Schließstellung ausgehend von dem Schließbereich (S) in Richtung der Drehachse (x) eine auf der Mittelebene (M) abgetragene freie Länge (1) aufweisen, wobei sich für zwei gegenüberliegende Schneidbereiche (14,15,16,17,18) in einer Richtung quer zu der Mittelebene (M) betrachtet jeweils eine größte Öffnungsbreite (b) ergibt, wobei weiter ausgehend von dem auf den Schließbereich in Richtung auf die Drehachse (x) folgenden ersten Schneidbereich (14) mindestens ein zweiter und ein dritter Schneidbereich (15, 16) folgen, deren größte Öffnungsbreite jeweils größer ist als die größte Öffnungsbreite jeder der vorhergehenden Schneidbereiche (14, 15), oder Schneidwerkzeug nach einem der vorhergehenden Ansprüche, **dadurch gekennzeichnet, dass** die jeweils gegenüberliegenden Schneidbereiche (14, 15, 16, 17, 18) bezogen auf die Mittelebene (M) eine gleiche Teillänge aufweisen und dass bei einem weiteren Schließen des Schneidwerkzeugs (1) verbleibende zwei konkave Schneidbereiche (16, 17) in eine Stellung überführbar sind, in der zwei in Bezug auf die Mittelebene (M) nebeneinander angeordnete und voneinander getrennte Öffnungen (O) verbleiben.

4. Schneidwerkzeug nach den Merkmalen des Oberbegriffs des Anspruchs 2 oder nach einem der vorhergehenden Ansprüche, wobei Schneidbereiche (14,15,16,17,18) mit mehr als zwei unterschiedlich größten Tiefen (t, t', t", t‴, t"") vorgesehen sind, **dadurch gekennzeichnet, dass** ein Schneidbereich (16) absolut größter Tiefe (t"), bezogen auf die freie Länge (1), der Hälfte oder einem ausgehend von der Hälfte sich zu der Drehachse (x) hin anschließenden Bereich der freien Länge (1) zugeordnet ist und dass jede Schneide (10, 11) mit Blick in Richtung auf die gegenüberliegende Schneide (11, 10) ausgehend von dem gelenknahen Schnittpunkt (P) zu der gegenüberliegenden Schneide etwa über zwei Drittel bis drei Viertel der Gesamtlänge (g) eine im Wesentlichen konkave, sichelartige Kontur aufweist, die endseitig der Schneide (10, 11) in zwei in Richtung der Gesamtlänge (g) anschließende Geradabschnitte (12, 13) übergeht.

5. Schneidwerkzeug nach einem der vorhergehenden Ansprüche, **dadurch gekennzeichnet, dass** die freie Länge (1) bei einer Stellung der Werkzeugschenkel (2, 3) mit einer Übereinanderlage nur in dem Schließbereich (S) neun Zehntel oder mehr der oder einer Gesamtlänge (g) der Schneiden (10, 11) und die maximale Öffnungsbreite (b) zwei Fünftel oder mehr der Gesamtlänge (g) der Schneiden (10, 11) beträgt.

6. Schneidwerkzeug nach einem der vorhergehenden Ansprüche, **dadurch gekennzeichnet, dass** die Schneiden (10, 11) in einem auf der Mittelebene (M) abgetragenen Abstand (a) von drei Fünftel oder weniger der oder einer Gesamtlänge (g) der Schneiden (10, 11) ausgehend von der Drehachse (x) beginnen.

7. Schneidwerkzeug nach einem der vorhergehenden Ansprüche, **dadurch gekennzeichnet, dass** ausgehend von der Stellung mit einer Übereinanderlage nur in dem Schließbereich (S) bei einem weiteren Schließen des Schneidwerkzeugs (1) bezogen auf die Drehachse (x) zunächst nur von radial außen nach radial innen zwei radial äußere konkave Schneidbereiche (10, 11) nachfolgend aus der freien Länge (1) ausscheiden.

8. Schneidwerkzeug nach Anspruch 7, soweit nicht auch rückbezogen auf Anspruch 3, **dadurch gekennzeichnet, dass** bei einem weiteren Schließen des Schneidwerkzeugs (1) verbleibende zwei konkave Schneidbereiche (16, 17) in eine Stellung überführbar sind, in der zwei in Bezug auf die Mittelebene (M) nebeneinander angeordnete und voneinander getrennte Öffnungen (O) verbleiben.

9. Schneidwerkzeug nach einem der Ansprüche 7 oder 8, **dadurch gekennzeichnet, dass** bei geschlossenem Schneidwerkzeug (1) keine freie Länge (1) gegeben ist.

10. Schneidwerkzeug nach einem der vorhergehenden Ansprüche, **dadurch gekennzeichnet, dass** ein konkaver Schneidbereich (14, 15, 16, 17, 18) durch einen kontinuierlich gekrümmt verlaufenden Schneidenabschnitt gebildet ist.

11. Schneidwerkzeug nach einem der vorhergehenden Ansprüche, **dadurch gekennzeichnet, dass** die Werkzeugschenkel (2, 3) im Zuge eines Schließens des Schneidwerkzeugs (1) in eine Stellung überführbar sind, in welcher die Schneiden (10, 11) bei beidseitiger Ausbildung der konkaven Schneidbereiche (14, 15, 16, 17, 18) eine im Wesentlichen rautenförmige Öffnung (R) bilden, wenn die Stege (19, 20, 21, 22, 23) der Schneidbereiche (14, 15, 16, 17, 18) an jeder Schneide (10, 11) für sich untereinander beziehungsweise radial innen mit der Mittelebene (M) durch eine gedachte gerade Linie (G, G', G", G‴, G"") verbunden werden.

## Claims

1. Pincer-like cutting tool (1) with two tool legs (2, 3) which can be pivoted relative to one another about an axis of rotation (x) along a pivoting plane (E), the tool legs (2, 3) forming handle sections (5, 6) on one side of the axis of rotation (x) and a pincer mouth (9) on the other side, wherein further working surfaces of the pincer mouth (9) are designed as cutting edges (10, 11) which, during a movement into a closed position of the cutting tool (1), come into an overlapping position for the first time in a closing area (S) radially outwardly to a remaining opening region, as seen from the axis of rotation (x), in a first closed position, wherein, in such a position, a plurality of cutting areas (14, 15, 16, 17, 18), which are formed opposite one another on the working surfaces and each have their own curvature contour and are forming the opening area, extend radially inwards and the cutting edges (10, 11), furthermore, in relation to a center plane (M) perpendicular to the swivel plane (E), which runs through the axis of rotation (x) and the closing area (S), in the first closing position starting from the closing region (S) have a free length (1) in the direction of the axis of rotation (x), which is measured on the central plane (M) which is perpendicular to the pivot plane (E) and extends through the axis of rotation (x) and the closing region (S), wherein furthermore a maximum opening width (b) is given over the free length (1) in the first closed position in a direction transverse to the center plane (M) between the cutting edges (10, 11), the maximum opening width (b) being one third or more of a total length (g) of the cutting edges (10, 11), wherein the total length (g) is taken off at a straight line beginning at an intersection point (P) close to the joint with the opposite cutting edge and ending at a free end of the cutting edge remote from the joint, and a respective maximum opening width (b', b", b‴, b"") is obtained for the cutting regions (14, 15, 16, 17), wherein, starting from the first cutting region (14) following the closing region (S) in the direction of the axis of rotation (x), a second and third cutting region (15, 16) is provided, the largest opening width (b', b) of which is in each case greater than the largest opening width (b', b"") of each of the preceding cutting regions (14, 15), **characterized in that** the respectively opposite cutting regions (14, 15, 16) have the same cutting region length (a, a', a", a‴) relative to the central plane (M) and **in that**, with reference to a representation in which the swivel plane (E) is represented as a surface and the central plane (M) as a line, the central plane (M) forms an axis of symmetry about which the visible contour of the two cutting edges (10, 11), thus defining the cutting opening (24), is mirrored.

2. Pincer-like cutting tool (1) with two tool legs (2, 3) which can be pivoted relative to one another about an axis of rotation (x) in a pivoting plane (E), the tool legs (2, 3) forming handle sections (5, 6) on one side of the axis of rotation (x) and a pincer mouth (9) on the other side, wherein further working surfaces of the pincer mouth (9) are designed as cutting edges (10, 11) which, upon a movement into a closed position of the cutting tool (1), come into a superimposed position radially outside to an opening region remaining in this position for the first time in a first closed position in a closing region (S), wherein the cutting edges (10, 11) further having, in relation to a center plane (M) which is perpendicular to the swivel plane (E) and extends through the axis of rotation (x) and the closing region (S), a free length (1) measured on the center plane (M) in the first closed position, starting from the closing region (S) in the direction of the axis of rotation (x), wherein further both cutting edges (10, 11) have separate concave cutting regions (14, 15, 16, 17, 18) over the free length (1) and wherein a cutting region (14, 15, 16, 17, 18) is oriented with respect to a vertical concerning an imaginary straight line (G, G', G", G"", G"") closing the cutting region, which in each case rests on a web (19, 20, 21, 22, 23) which extends in a tip-like manner from an adjacent cutting region (14, 15, 16, 17, 18), has a maximum depth (t, t', t", t‴, t""), each cutting edge (10, 11) has only a number of three to seven cutting regions (14, 15, 16, 17, 18) over the free length (1), or cutting tool according to claim 1, **characterized in that** at least two cutting regions (14, 15, 16, 17, 18) of each cutting edge (10, 11) have a greatest depth (t, t', t", t‴, t"") of 0, 4 or more millimeters and that, furthermore, in a perpendicular projection of the webs (19, 20, 21, 22, 23) extending like tips onto the central plane (M) along the central plane (M), distances (a', a", a‴) result between the webs (19, 20, 21, 22, 23) which correspond to the individual cutting regions (14, 15, 16, 17, 18), wherein the distance (a', a", a‴) between two webs (19, 20, 21, 22, 23) of a cutting region (14, 15, 16, 17, 18) corresponds to 0.7 to 1.3 times the distance (a', a", a‴) between two webs (19, 20, 21, 22, 23) of the adjacent cutting region (14, 15, 16,17,18).

3. Pincer-like cutting tool (1) with two tool legs (2, 3) which can be pivoted relative to one another about an axis of rotation (x) along a pivoting plane (E), the tool legs (2, 3) forming handle sections (5, 6) on one side of the axis of rotation (x) and a pincer mouth (9) on the other side, wherein further working surfaces of the pincer mouth (9) are designed as cutting edges (10, 11) which, during a movement into a closed position of the cutting tool (1), are radially outwardly directed towards a remaining opening region, as seen from the axis of rotation (x), in a first closed position, come into an overlapping position for the first time in a closing area (S), wherein in the first closed position a plurality of cutting areas (14, 15, 16, 17, 18), which are formed opposite one another on the working surfaces and each have their own curvature contour and form the opening area, extend radially inwards, 15, 16, 17, 18) forming the opening area, and the cutting edges (10, 11), furthermore, in relation to a center plane (M) perpendicular to the swivel plane (E), which runs through the axis of rotation (x) and the closing area (S), in the first closed position starting from the closing region (S) in the direction of the axis of rotation (x) has a free length (1) measured on the central plane (M), wherein for two opposite cutting regions (14, 15, 16, 17, 18), viewed in a direction transverse to the central plane (M), in each case a largest opening width (b) results, wherein further starting from the first cutting region (14) following the closing region in the direction of the axis of rotation (x) at least a second and a third cutting region (15, 16) follow, the largest opening width of each of which is greater than the largest opening width of each of the preceding cutting regions (14, 15), or cutting tool according to one of the preceding claims, **characterized in that** the respectively opposite cutting regions (14, 15, 16, 17, 18) have an equal partial length in relation to the central plane (M) and **in that**, when the cutting tool (1) is closed further, the two concave cutting regions (16, 17) remaining can be transferred into a position in which two openings (O) remain which are arranged next to one another and separated from one another in relation to the central plane (M).

4. Cutting tool according to the features of the generic term of claim 2 or according to one of the preceding claims, wherein cutting regions (14, 15, 16, 17, 18) with more than two different greatest depths (t, t', t", t‴, t"") are provided, **characterized in that** a cutting region (16) of absolute greatest depth (t"), relative to the free length (1), is assigned to half of the free length (1) or to a region of the free length (1) adjoining the axis of rotation (x) starting from the half, and **in that** each cutting edge (10, 11) has a substantially concave, crescent-shaped contour over approximately two thirds to three quarters of the total length (g), starting from the intersection point (P) close to the joint to the opposite cutting edge, which contour merges at the end of the cutting edge (10, 11) into two straight sections (12, 13) adjoining in the direction of the total length (g).

5. Cutting tool according to one of the preceding claims, **characterized in that** the free length (1) in a position of the tool legs (2, 3) with a superposition only in the closing region (S) is nine tenths or more of the or a total length (g) of the cutting edges (10, 11) and the maximum opening width (b) is two fifths or more of the total length (g) of the cutting edges (10, 11).

6. Cutting tool according to one of the preceding claims, **characterized in that** the cutting edges (10, 11) start at a distance (a) of three fifths or less of the or a total length (g) of the cutting edges (10, 11) removed on the central plane (M) starting from the axis of rotation (x).

7. Cutting tool according to one of the preceding claims, **characterized in that**, starting from the position with an overlap only in the closing region (S), upon further closing of the cutting tool (1) with respect to the axis of rotation (x), initially only two radially outer concave cutting edges (10, 11) subsequently exit from the free length (1) from radially outside to radially inside.

8. Cutting tool according to claim 7, unless also referred back to claim 3, **characterized in that**, when the cutting tool (1) is closed further, the remaining two concave cutting regions (16, 17) can be transferred into a position in which two openings (O) arranged next to one another and separated from one another in relation to the central plane (M) remain.

9. Cutting tool according to one of claims 7 or 8, **characterized in that** there is no free length (1) when the cutting tool (1) is closed.

10. Cutting tool according to one of the preceding claims, **characterized in that** a concave cutting region (14, 15, 16, 17, 18) is formed by a continuously curved cutting edge section.

11. Cutting tool according to one of the preceding claims, **characterized in that** the tool legs (2, 3) can be transferred, in the course of closing the cutting tool (1), into a position in which the cutting edges (10, 11) form a substantially diamond-shaped opening (R) with on both sides having concave cutting regions (14, 15, 16, 17, 18) when the webs (19, 20, 21, 22, 23) of the cutting regions (14, 15, 16, 17, 18) on each cutting edge (10, 11) are connected to each other or radially inwards to the center plane (M) by an imaginary straight line (G, G', G", G'", G"").

## Revendications

1. Outil de coupe (1) du type pince avec deux branches d'outil (2, 3) qui peuvent pivoter l'une par rapport à l'autre autour d'un axe de rotation (x) le long d'un plan de pivotement (E), les branches d'outil (2, 3) formant d'un côté de l'axe de rotation (x) des sections de poignée (5, 6) et de l'autre côté une mâchoire de pince (9), les surfaces de travail de la mâchoire de la pince (9) étant en outre réalisées sous forme de tranchants (10, 11) qui, lors d'un mouvement vers une position de fermeture de l'outil de coupe (1), sont situés radialement à l'extérieur par rapport à une zone d'ouverture restante, vue depuis l'axe de rotation (x), dans une première position de fermeture, viennent pour la première fois en position de concordance dans une zone de fermeture (S), dans une telle position, plusieurs zones de coupe (14, 15, 16, 17, 18), et les lames (10, 11) se raccordent en outre, par rapport à un plan médian (M) perpendiculaire au plan de pivotement (E) et passant par l'axe de rotation (x) et la zone de fermeture (S), dans la première position de fermeture, à partir de l'axe de rotation (x) et de la zone de fermeture (S) (S) dans la direction de l'axe de rotation (x), une longueur libre (1) enlevée sur le plan médian (M), qui est enlevée le long d'un plan médian (M) perpendiculaire au plan de pivotement (E) et s'étendant à travers l'axe de rotation (x) ainsi que la zone de fermeture (S), dans lequel, en outre, une largeur d'ouverture maximale (b) est donnée sur la longueur libre (1) dans la première position de fermeture dans une direction transversale au plan médian (M) entre les lames (10, 11), la largeur d'ouverture maximale (b) étant un tiers ou plus d'une longueur totale (g) des lames (10, 11), la longueur totale (g) étant tracée sur une droite commençant à un point d'intersection (P) proche de l'articulation avec le tranchant opposé et se terminant à une extrémité libre éloignée de l'articulation du tranchant, et une largeur d'ouverture maximale (b', b", b‴, b"") étant respectivement obtenue pour les zones de coupe (14, 15, 16, 17), en partant de la première zone de coupe (14) qui suit la zone de fermeture (S) en direction de l'axe de rotation (x), une deuxième et une troisième zone de coupe (15, 16) dont la plus grande largeur d'ouverture (b', b) est respectivement supérieure à la plus grande largeur d'ouverture (b', b"") de chacune des zones de coupe (14, 15) précédentes, **caractérisé en ce que** les zones de coupe (14, 15, 16) respectivement opposées présentent, par rapport au plan médian (M), une longueur de zone de coupe (a, a', a", a‴) identique et **en ce que**, par rapport à une représentation dans laquelle le plan de pivotement (E) se présente comme une surface et le plan médian (M) comme une ligne, le plan médian (M) forme un axe de symétrie autour duquel le contour visible, et donc définissant l'ouverture de coupe (24), des deux lames (10, 11) est réfléchi.

2. Outil de coupe (1) du type pince avec deux branches d'outil (2, 3) qui peuvent pivoter l'une par rapport à l'autre autour d'un axe de rotation (x) dans un plan de pivotement (E), les branches d'outil (2, 3) formant d'un côté de l'axe de rotation (x) des sections de poignée (5, 6) et de l'autre côté une mâchoire de pince (9), les surfaces de travail de la mâchoire de la pince (9) étant en outre réalisées sous forme de tranchants (10, 11) qui, lors d'un mouvement vers une position de fermeture de l'outil de coupe (1), viennent se superposer radialement à l'extérieur par rapport à une zone d'ouverture subsistant à cet endroit, pour la première fois dans une première position de fermeture dans une zone de fermeture (S), les tranchants (10, 11) présentent en outre, par rapport à un plan médian (M) perpendiculaire à l'axe de pivotement (E) et passant par l'axe de rotation (x) et la zone de fermeture (S), dans la première position de fermeture, en partant de la zone de fermeture (S) dans la direction de l'axe de rotation (x), une longueur libre (1) enlevée sur le plan médian (M), où en outre-deux lames (10, 11) présentent des zones de coupe concaves (14, 15, 16, 17, 18) séparées les unes des autres sur la longueur libre (1) et où une zone de coupe (14, 15, 16, 17, 18) est située par rapport à une perpendiculaire à une droite imaginaire (G, G', G", G‴,G"") fermant la zone de coupe, qui repose respectivement sur une barrette (19, 20, 21, 22, 23) se terminant en pointe et séparant une zone de coupe considérée (14, 15, 16, 17 et 18) d'une zone de coupe voisine (14, 15, 16, 17, 18), présente une profondeur maximale (t, t', t", t‴, t""), chaque tranchant (10, 11) ne présente sur la longueur libre (1) qu'un nombre de trois à sept zones de coupe (14, 15, 16, 17, 18), ou Outil de coupe selon la revendication 1, **caractérisé en ce qu'**au moins deux zones de coupe (14, 15, 16, 17, 18) de chaque tranchant (10, 11) ont une profondeur maximale (t, t', t", t‴, t"") de 0,4 ou plus de millimètres et **en ce que**, en outre, lors d'une projection verticale des nervures (19, 20, 21, 22, 23) se terminant en pointe sur le plan médian (M), on obtient le long du plan médian (M) des distances (a', a", a‴) entre les nervures (19, 20, 21, 22, 23) qui correspondent aux différentes zones de coupe (14, 15, 16, 17, 18), la distance (a', a", a‴) entre deux nervures (19, 20, 21, 22, 23) d'une zone de coupe (14, 15, 16, 17, 18) correspondant à 0,7 à 1,3 fois la distance (a', a", a‴) entre deux nervures (19, 20, 21, 22, 23) de la zone de coupe voisine (14, 15, 16,17,18).

3. Outil de coupe (1) du type pince avec deux branches d'outil (2, 3) qui peuvent pivoter l'une par rapport à l'autre autour d'un axe de rotation (x) le long d'un plan de pivotement (E), les branches d'outil (2, 3) formant d'un côté de l'axe de rotation (x) des sections de poignée (5, 6) et de l'autre côté une mâchoire de pince (9), les surfaces de travail de la mâchoire de la pince (9) étant en outre réalisées sous forme de tranchants (10, 11) qui, lors d'un mouvement vers une position de fermeture de l'outil de coupe (1), sont situés radialement à l'extérieur par rapport à une zone d'ouverture restante, vue depuis l'axe de rotation (x), dans une première position de fermeture, viennent pour la première fois en position de concordance dans une zone de fermeture (S), dans laquelle, dans la première position de fermeture, plusieurs zones de coupe (14, 15, 16, 17, 18), et les tranchants (10, 11) se raccordent en outre, par rapport à un plan médian (M) perpendiculaire au plan de pivotement (E) et passant par l'axe de rotation (x) et la zone de fermeture (S), dans la première position de fermeture en partant de la zone de fermeture (S) dans la direction de l'axe de rotation (x), une longueur libre (1) enlevée sur le plan médian (M), une largeur d'ouverture maximale (b) étant respectivement obtenue pour deux zones de coupe (14, 15, 16, 17, 18) opposées, vues dans une direction transversale au plan médian (M), dans lequel, en partant de la première zone de coupe (14) qui suit la zone de fermeture en direction de l'axe de rotation (x), suivent au moins une deuxième et une troisième zone de coupe (15, 16) dont la plus grande largeur d'ouverture est respectivement supérieure à la plus grande largeur d'ouverture de chacune des zones de coupe précédentes (14, 15), ou outil de coupe selon l'une des revendications précédentes, **caractérisé en ce que** les zones de coupe (14, 15, 16, 17, 18) respectivement opposées présentent une longueur partielle identique par rapport au plan médian (M) et **en ce que**, lors d'une fermeture supplémentaire de l'outil de coupe (1), deux zones de coupe concaves (16, 17) restantes peuvent être transférées dans une position dans laquelle deux ouvertures (O) disposées l'une à côté de l'autre et séparées l'une de l'autre par rapport au plan médian (M) subsistent.

4. Outil de coupe selon les caractéristiques du terme générique de la revendication 2 ou selon l'une des revendications précédentes, des zones de coupe (14, 15, 16, 17, 18) étant prévues avec plus de deux profondeurs différentes (t, t', t", t‴, t""), **caractérisé en ce qu'**une zone de coupe (16) de profondeur absolument maximale (t"), par rapport à la longueur libre (1), est associée à la moitié de la longueur libre (1) ou à une zone de la longueur libre (1) se raccordant à l'axe de rotation (x) en partant de la moitié, et **en ce que** chaque lame (10, 11) présente, en regardant en direction de l'arête de coupe opposée (11,10), à partir du point d'intersection (P) proche de l'articulation vers l'arête de coupe opposée, sur environ deux tiers à trois quarts de la longueur totale (g), un contour essentiellement concave, en forme de faucille, qui se transforme, du côté de l'extrémité de l'arête de coupe (10, 11), en deux sections droites (12, 13) se raccordant en direction de la longueur totale (g).

5. Outil de coupe selon l'une quelconque des revendications précédentes, **caractérisé en ce que**, dans une position des branches d'outil (2, 3) avec une superposition uniquement dans la zone de fermeture (S), la longueur libre (1) est égale ou supérieure à neuf dixièmes de la ou d'une longueur totale (g) des lames (10, 11) et la largeur d'ouverture maximale (b) est égale ou supérieure à deux cinquièmes de la longueur totale (g) des lames (10, 11).

6. Outil de coupe selon l'une des revendications précédentes, **caractérisé en ce que** les arêtes de coupe (10, 11) commencent à une distance (a), enlevée sur le plan médian (M), de trois cinquièmes ou moins de la ou d'une longueur totale (g) des arêtes de coupe (10, 11) à partir de l'axe de rotation (x).

7. Outil de coupe selon l'une des revendications précédentes, **caractérisé en ce que**, partant de la position avec une concordance uniquement dans la zone de fermeture (S), lors d'une fermeture supplémentaire de l'outil de coupe (1) par rapport à l'axe de rotation (x), deux zones de coupe concaves radialement extérieures (10, 11) se dégagent ensuite de la longueur libre (1), tout d'abord uniquement de l'extérieur radial vers l'intérieur radial.

8. Outil de coupe selon la revendication 7, dans la mesure où il ne se rapporte pas également à la revendication 3, **caractérisé en ce que**, lors d'une fermeture supplémentaire de l'outil de coupe (1), deux zones de coupe concaves (16, 17) restantes peuvent être transférées dans une position dans laquelle deux ouvertures (O) disposées côte à côte et séparées l'une de l'autre par rapport au plan médian (M) subsistent.

9. Outil de coupe selon l'une des revendications 7 ou 8, **caractérisé en ce qu'**aucune longueur libre (1) n'est donnée lorsque l'outil de coupe (1) est fermé.

10. Outil de coupe selon l'une quelconque des revendications précédentes, **caractérisé en ce qu'**une zone de coupe concave (14, 15, 16, 17, 18) est formée par une partie de coupe s'étendant de manière incurvée en continu.

11. Outil de coupe selon l'une des revendications précédentes, **caractérisé en ce que** les branches (2, 3) de l'outil peuvent être amenées, au cours d'une fermeture de l'outil de coupe (1), dans une position dans laquelle les tranchants (10, 11), lorsque les zones de coupe concaves (14, 15, 16, 17, 18) forment une ouverture (R) sensiblement en forme de losange, lorsque les nervures (19, 20, 21, 22, 23) des zones de coupe (14, 15, 16, 17, 18) sur chaque tranchant (10, 11) sont reliées entre elles ou radialement à l'intérieur avec le plan médian (M) par une ligne droite imaginaire (G, G', G", G‴, G"").
